# EUROPEAN PATENT APPLICATION

(11) **EP 1 486 849 A1**
(43) Date of publication of application: **15.12.2004**
(21) Application number: 03012292.3
(22) Date of filing: 12.06.2003
(51) Int. Cl.: G06F 1/00

(54) **License management in computer systems that use dynamic service-to-server distribution**

(71) Applicant: SAP Aktiengesellschaft, 69190 Walldorf (DE)
(72) Inventor: Scheibli, Daniel, 76137 Karlsruhe (DE)
(74) Representative: COHAUSZ & FLORACK

(57) **Abstract**

Operating (400) a computer service (213) - from a set of services - on a computer server (913) - from a set of computer servers. The execution of the service (213) by a first partner (203) - the service customer - depends on a license agreement with a second partner (201) - the service vendor.

Under supervision of the second partner (201) and exclusively on a license management computer (912), a license rule set (252) is installed (410) to determine the availability state (presence of absence) of a license for any service-to-server assignment. For a particular service-to-server assignment, the rule set (252) is then applied (420) to determine the availability state for that assignment. For the first availability state - presence - the execution of the computer service (213) is enabled (430) according to the particular service-to-server assignment.

## Description

### Field of the Invention

The present invention generally relates to data processing and, more particularly, relates to computer systems, programs and methods for managing software licenses.

### Background

In the business of exchanging software between organizations, such as between vendors and customers, the vendors grant licenses to the customers for using software services on particular hardware servers. Some techniques employ software/hardware keys and thereby automatically check the validity of a license. Such techniques require the customer to identify the particular computer server to the vendor.
The key techniques face further technical problems, especially in distributed landscapes of multiple services and multiple computers. To name only a few problems:
a) Diversification into software services causes the number of licenses to increase linearly with the number of services (e.g., one license per service).
b) The concept of distributing multiple software services to multiple servers (also called "service virtualization") conflicts with the concept of identifying particular servers and services. Installation and execution of services on any server increases the number of licenses in a non-linear manner.
Distributing services is desired however, for example, to ensure fail-safe redundancy of computer servers.
There is a need to provide computer systems, programs and methods for managing software licenses that alleviate these and other technical problems.

### Summary of the Invention

The above-mentioned problems are solved technically by the invention defined in the independent claims. Preferred implementations are subject to the dependent claims.
A computer service - that is selected from a set of services - is operated on a computer server - that is selected from a set of computer servers. The execution of the service by a first partner (referred to a "customer") depends on a license agreement between the first partner and a second partner (referred to as "vendor").
A license rule set is installed exclusively on a license management computer under supervision of the second partner. The rule set is provided for determining the availability state (i.e. first availability state being presence, second availability state being absence) of a license for any service-to-server selection. The rule set is applied for a particular service-to-server selection to determine the availability state; and for a first availability state (i.e. presence), the execution of the computer service according to the particular service-to-server selection is enabled. In an exemplary implementation of the present invention, a service vendor provides a license manager and license rules to the service customer; the license management computer server applies the rules for particular service/server selections to either executing the service on the particular server (license present) or not (license absent). For any selection of N services and M servers, this approach potentially allows keeping track of N*M licenses.

### Brief Description of the Drawings

- FIG. 1: illustrates a simplified flow chart diagram of an exemplary method of the present invention;
- FIG. 2: illustrates an overview of the present invention in an exemplary basic scenario with one service and one server;
- FIG. 3: illustrates an enhanced scenario with multiple services and multiple servers; and
- FIG. 4: illustrates a simplified block diagram of an exemplary computer system having a plurality of computers.

### Brief Description of Tables

- TABLE 1: lists exemplary license types and exemplary rule sets;
- TABLE 2: lists possible combinations of services with servers, actual selections, information about traditional licenses, as well as rule set and enabling/preventing performance according to the present invention.

### Detailed Description

Preferably, the present invention is implemented by computers (i.e. processors with memory), within a computer network system. A general description of such a system appears at the end of the specification.

The explanation conveniently uses terms as introduced in the following glossary.
"Installing" stands for writing the service into memory so that the processor of the computer has access to it. The memory can be temporary memory (e.g., RAM) or permanent memory (e.g., ROM, disk drive) or any combination thereof. Memory and processor communicate according to their physical location, for example, via bus or via computer network. Optionally, during installing, the memory is allocated to the processor (e.g., in case of network communication).
"Executing" stands for performing the functions of the service by the processor.
"Service" (S) stands for software that is part of a business application, for example, a database node, an application component, a J2EE engine, an Internet portal etc. Description and drawings identify particular services by uppercase letters, such as "A", "B" and "C".
"Set of services" stands for at least one service. Conveniently, a set makes up an Enterprise Service Architecture (ESA).
"Service vendor" (SV, or "manufacturer") stands for an organization that provides the service.
"Service customer" (SC) stands for an organization that uses the service.
"Server" stands for a computer (i.e. a processor with memory) that executes the service.
"Set of servers" stand for at least one computer server (with processor and memory).
"Service and server selection" or "service/server" stands collectively for any assignment of a particular service to a particular server or vice versa. The exemplary selections herein are all service to server assignments. Based on the description herein, persons of skill in the art can implement the present invention by server to service assignments. Assignments in both directions can be used at the same time.
"License" stands for the right given by the service vendor to the service customer to execute a specific service. The right is usually specified in a license agreement between vendor (SV) and customer (SC). The agreement can give further limitations, for example, in terms of particular servers, number of users, or time periods.
"Availability state" stands collectively for any technical representation that indicates either presence of absence of a license.
"License manager" is software in an exemplary implementation to perform the method of the present invention.
"License management computer" (LMC) stands for a computer that executes the license manager.
"License organization" (LO) stands for an organization that operates the license manager. It can be a) the customer (SC) itself, b) the vendor (SV) or c) a third party organization (e.g., application service provider (ASP)). The explanation conveniently refer to the organization being part of customer (case a). Persons of skill in the art can implement cases b) and c) according to the present invention without the need of further explanation herein.
"Exclusively under supervision" means that only the vendor decides who applies the rules.

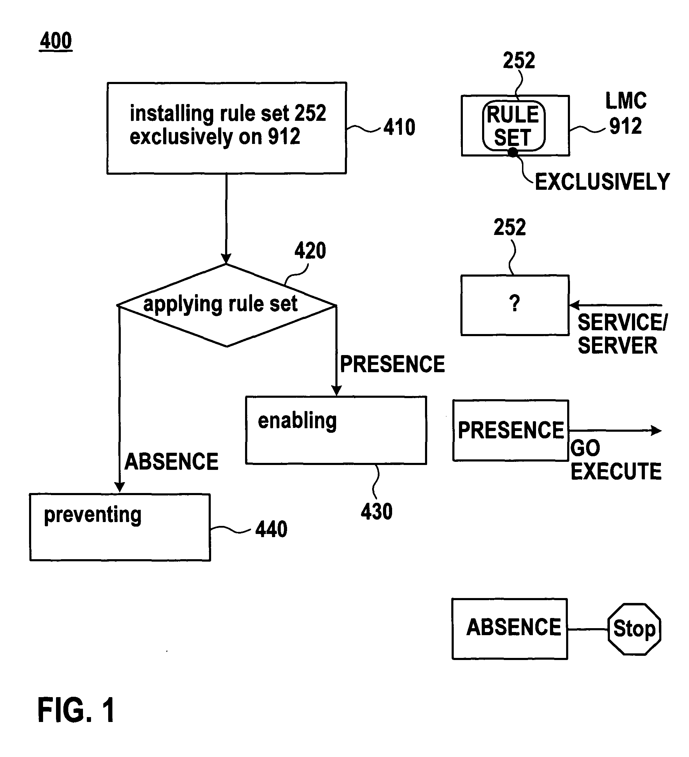

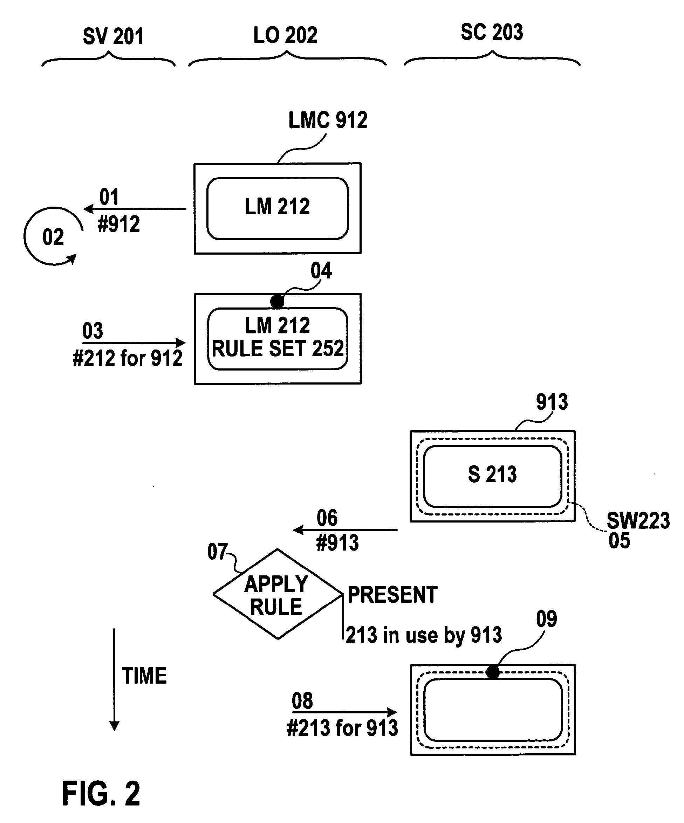

FIG. 1 illustrates a simplified flow chart diagram of method 400 of the present invention for operating a computer service (e.g. 213 in FIG. 2) - selected from a set of services - on a computer server (e.g., server 913 in FIG. 2) - selected from a set of computer servers.
The figure shows the flow chart on the left side and symbols for hardware, software and availability states on the right side. The method comprises:
Step installing 410 - exclusively to a license management computer (LMC, e.g., 912) - a license rule set (cf. 252 in FIG. 2) for determining the availability (i.e. presence or absence) of a license for any service and server selection.
Step applying 420 the rule set for a particular service/server to determine presence or absence of that particular service/server. Applying 420 is illustrated as a query step; depending on presence or absence, the flow bifurcates into enabling 430 and preventing 440, respectively.
Step enabling 430 the execution of the computer service according to the particular service-to-server selection in case of presence.
Preventing 440 the execution computer service according to the particular service-to-server selection in case or absence.

It is advantageous that concentrating license management to technically a single computer (i.e. the LMC) alleviates the license number problem caused by diversification, see above. Also, applying the rule set is the technical approach to obtain the answer to the agreement-related question "Is there a license for the particular service and server selection?". The provider of the rule set (i.e. the vendor) does not need to know the particular servers (i.e. of the customer) in terms of overall number, service manufacturer or even identification of each server. Advantageously, a license manager (e.g., 212) is installed on the license management computer. Preferably, installing 410 comprises to install the license manager and the rule set at different time points. Installation in consecutive order (e.g. manager prior to rules, or vice versa) eases exchange between vendor and customer. The license manager can be a standard tool that the vendor gives away free of charge and that is not related to any particular license agreement. If implemented as standard tool, the manager can be part of a software package with services that the vendor ships to the customer. In other words, exclusivity is not needed for the manager alone without rules. The rule set is the technical representation of the agreement. It is also convenient that the vendor can ship the rule set through the department that arranges license agreements with the customers.
Advantageously, license manager and rule set are installed substantially simultaneously (e.g., in a package).
Advantageously, the license manager is installed on a license management computer that has processor and memory redundancy. Using redundancy (e.g., by doubling processor or memory) increases the reliability of using the invention.
Advantageously, step installing 410 comprises to use license key technology (LKT, details explained in FIG. 2). LKT ensure exclusivity and prevents unauthorized copying of rule sets. Since the rule sets are operable only on the management computer, there is no need to protect the rule set by encrypting the transmission from vendor to management computer.
Advantageously, step installing 410 comprises to install the rule set in form of a table. Tables are common for computer services.
Advantageously, step applying 420 the rule set is performed upon receiving a request from the server of the particular service-to-server selection. This allows to identify the particular server automatically.
Advantageously, step applying 420 the rule set is performed upon receiving a request from a service wrapper.
Advantageously, Preferably, the service wrapper, the service wrapper participates in step enabling 430 by using LKT. LKT allows to use the present invention in computer systems with services that are not specially adapted for use with the present invention compatibility.
Advantageously, step applying 420 the rule set comprises to record the particular service and server selection for that presence has been established.
Advantageously, step applying 420 the rule set comprises to record the particular service-to-server selection in combination with a derived rule. In repeating step 420 for further service/server, the license can then be determined as being absence. Recording selections (e.g., in tables) to indicate ABSENCE/PRESENCE in convenient to keep track of the licenses.
Advantageously, the rule set determines presence or absence of licenses with types such as: (i) license to use a particular service on a particular server; (ii) license to use a particular service exclusively on a particular server; (iii) license to use a particular service simultaneously in a predetermined number on any servers; and (iv) license to use a particular service for a predetermined time period. (Examples with details in TABLE 1)
The license types can be combined, for example (iii) and (iv) license to use a particular service for a predetermined time period (e.g., hours, days, months, years) in a predetermined number on any servers. Type (iii) does not require the vendor to have knowledge about the particular servers in use by the customers. In other words, logistical efforts to transmit serial numbers (or hardware keys in general) from customer to vendor is not longer needed.
In case of license with a limited duration (e.g., (iv)) it is convenient to have the rule set applicable beyond that duration.
Advantageously, the steps are performed as: step installing 410 by a license organization (LO) according to a license agreement between a service vendor (SV) and a service customer (SC); step applying 420 by the license organization. That allows the customer to select and use selections independently from the vendor (at any time).

FIG. 2 illustrates an overview of the present invention in the exemplary implementation with one service and one server. From left to right, the figure shows:
- service vendor (SV) 201,
- license organization (LO) 202, and
- service customer (SC) 203.
The figure conveniently uses rectangles with sharp comers as the symbol for hardware (e.g., servers 912, 913), rectangles with round corners for software (e.g., manager 212, service 213) and black circles for indicating the presence of a license. Similar as in FIG. 1, the process of performing the method follows the top-down direction.
To provide exclusivity, the preferred implementation uses license key technique (or LKT): A hardware key is a number that identifies a particular server. Within the computers of organization and customer, the number is unique. The number is derived from hardware properties that are unique for the particular server; e.g. the Media Access Control (MAC) address of a network card that is coupled to the server. Exemplary formats are: string, integer, real a combination thereof. A software key is a number that is generated based on information like hardware key, customer number (e.g., customer 203), service identification (product name, version), validity start/end data and other information. A license key is a software key that indicates the presence (alternative: absence) of a license to a server for automatically starting to execute an installed service (alternative: preventing executing).
The explanation refers to the keys by #symbols left to the reference number. For example, #913 is a hardware key for server 913; #213 is the software key for service 213; "213 for 913" means that service 213 is licensed to be operated on server 913. The absence of a license could be given similarly, for example, "212 not for 913".
A service wrapper (SW) is software to apply LKT to detect the presence (alternative: absence) the license key and that starts executing the installed service in case of presence (alternative: prevents) (cf. steps 430, 440). For explanation, it is conveniently assumed that there is one wrapper per service, for example, wrapper 223 for service 213. The wrapper can be implemented for subsequent installation into a service that has already be installed ("service add-on").

In preparation, service vendor 201 provides license manager 212 to license organization 202, and license organization 202 installs license manager 212 on its license management computer (LMC) 912.
For convenience of explanation it is assumed that license manager 212 and rule set 252 are provided by service vendor 201, and license organization 202 is associated with service customer 203 and has therefore information about the license agreement between service customer 203 and service vendor 201.
The following describes how to initialize license manager 212 with rule set 252 (i.e. step installing 410):
- 01:: License organization 202 sends the hardware key (e.g., "#912") of LMC 912 to service vendor 201. Usually, license organization 202 includes further information specified in the license agreement, such as a customer number (to identify service customer 203), a service number (to identify service 213, usually name of service, like "A" and a version number, like "1.1").
- 02:: Vendor 201 generates the license key (e.g., #212 for 912) for license manager 212, for example, by looking up in a list of computers (at license organization 202) for that manager 212 and rule set 252 could be installed. In an alternative, the license key could be linked to rule set 252.
- 03:: Vendor 201 sends license key (i.e. #212 for 912) and rule set 252 to license organization 202. Exemplary rule set 252 is of type (iii) "license to use a single service on any server".
- 04:: The license key has arrived; license organization 202 is now authorized to use license management computer LMC 912 in combination with rule set 252 (cf. the circle symbol). Interactions between service vendor 201 and license organization 202 are no longer required (advantage). As explained in the following, service customer 203 calls license manager 212 under predefined circumstances, but not all the time (advantage).
Installing service 213 on server 913 is assumed to have been completed as well.
The following explains details for applying rule set 252 (step 420) and enabling the execution of service 213 (step 430).
- 05:: Service customer 203 starts service wrapper 223 (on computer 913). Service wrapper 223 determines presence or absence of a license for the service 213 by evaluating keys #213 and #913. For presence, service wrapper 223 starts service 213. Operation under point 05 is a standard operation (LKT) and can be used for services that have been installed prior to introducing the license manager of the present invention (advantage).
- 06:: For absence (as assumed here), service wrapper 223 sends hardware key #913 of server 913 (optionally, further information about service) and thereby cause license manager 212 to apply rule set 252.
- 07:: License manager 912 compares hardware key #913 to hardware keys for that licenses keys are present (or absent). According to the rule, a license key is present for any hardware key, the manager stores the following information "213 in use by 913".
- 08:: License manager 212 sends the license key "#213 for 913" to service wrapper 223 (step 430).
- 09:: Service wrapper 223 starts the execution of service 213.

Optionally, service wrapper 223 continues to checks the presence of the license. If the license key validity is running out, the service wrapper gets back to the license manager and requests a new license key (point 06-09).

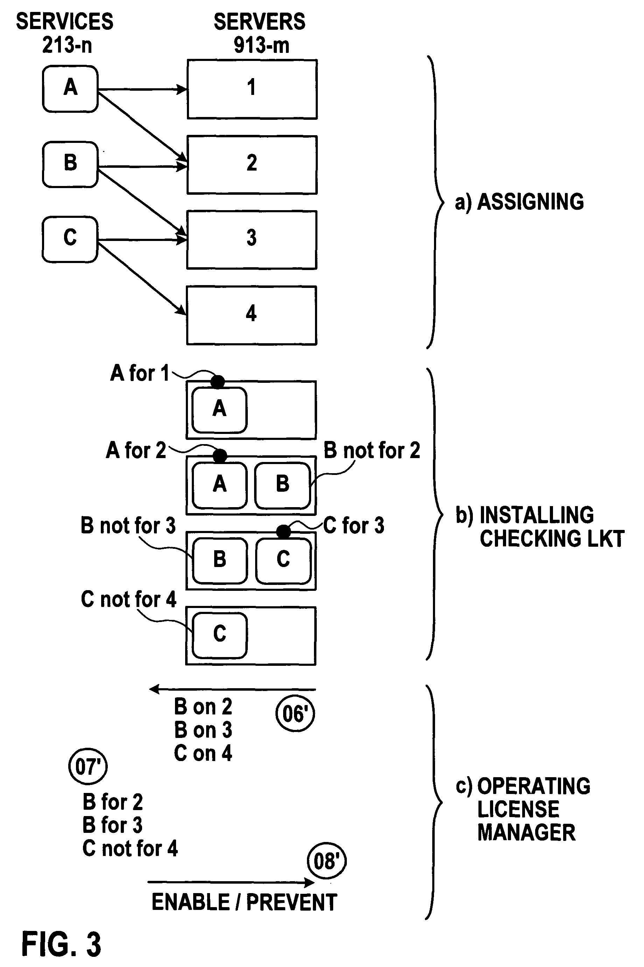

FIG. 3 in combination with TABLE 2 illustrates details for a further implementation with multiple services (213-n, set A, B, and C) and multiple servers (913-m, set 1, 2, 3 and 4). The exemplary license type is (ii) "particular service on particular server". Symbols of FIG. 2 like rectangles with sharp or round corners, black circles, arrows and the like are used likewise.
For fully using the advantages of the present invention, the number of services and the number of servers is increased. While points 01 to 05, are substantially similar as in FIG. 2; the last actions (e.g., 06' to 08') are enhanced by 3 preparation steps:
(a) assigning services to servers,
(b) installing the assigned services, and
(c) operating the license manager (for license requests, as in points 07 and 08) according to method 400.
It is advantageous that (a) and (b) (performed by service customer 203) and (c) (performed by license organization 202) are substantially independent from each other.
It is further advantageous that the installation of the assigned services follows the operation of the license manager, so that attempts (cf. points 05 and 06) to start services (if licenses are still absent) are no longer needed.
More in detail, the example of FIG. 3 uses a set of N = 3 services 213-A, 213-B, and 213-C as well as a set of M = 4 servers 913-1, 913-2, 913-3 and 913-4. Using all n/m service/server indices, there are N*M = 12 possible combinations (i.e., A1, A2, ..., C3, C4). The exemplary selection scheme is simplified; selections of AA1 type are possible, but not discussed here. For example, the steps are performed as:
(a) assigning (arrow symbols, selecting some combinations, e.g., A on 1 and 2, B on 2 and 3, C on 3 and 4)
(b) installing the assigned services ("round comers" going into "sharp corners" and checking for LKT-licenses. As indicated by circle symbols, LKT-licenses are present in "A for 1 "; "A for 2"; and "C for 3". Executing is therefore enabled without any further actions. LKT-licenses are absent in "B not for 2", "B not for 3", and "C not for 4" (cf. TABLE 2).
(c) operating license manager 212 (rule set in table 2) for assignments without LKT-license.

- 06': Service wrapper 223 sends a request for "B on 2", "B on 3", "C to 4" to license manager 212. (assuming one wrapper for all services; having multiple wrapper for multiple services are also contemplated).
- 07':: License manager 912 evaluates the request by applying the rule set 252 (cf. TABLE 2), to determine "B for 3", "B for 4", C not for 4".
- 08':: License manager 212 enables execution of B and prevents execution of service C (on server 4).

The service-and-server selection is made by customer 203 without negotiation with vendor 203, fitting into the "computing on demand" approach. Conveniently, the servers are provided in blade server technology (processor/memory located on a single circuit board; multiple servers in racks). Servers can be added (or removed) at any time.

The enhanced scenario of FIG. 2 can be modified by re-arranging the in order, for example to:
a) assigning services to servers
c) operating the license manager (for license requests, as in points 07 and 08) and
b) installing the assigned services
As mentioned above, the servers can also be assigned to services.

Having described details for the present invention, the explanation turns to a computer system on that the invention may be implemented.

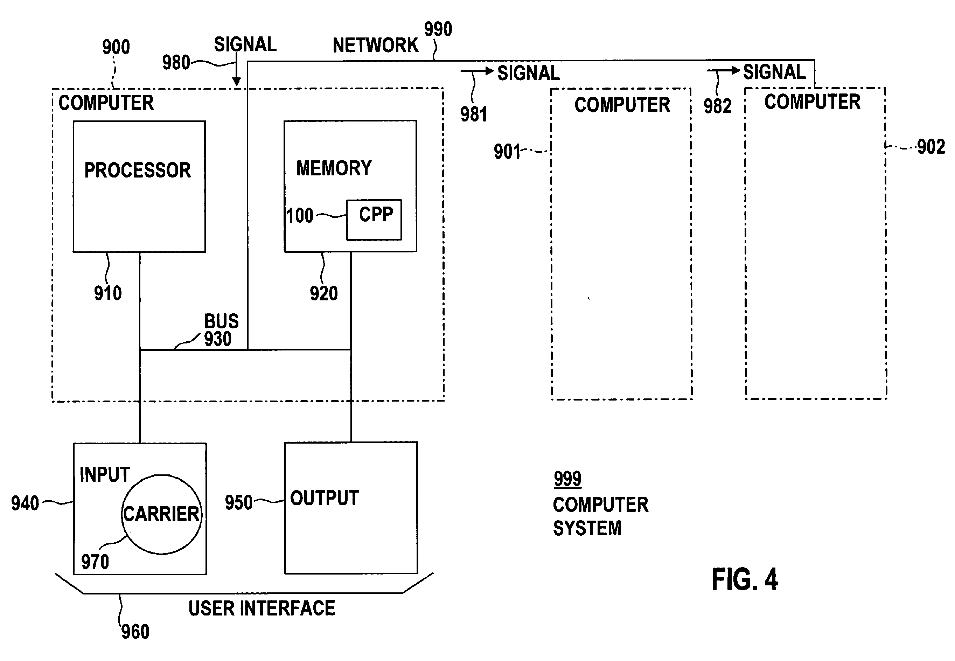

FIG. 4 illustrates a simplified block diagram of exemplary computer system 999 having a plurality of computers 900, 901, 902 (or even more).
Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980.

In respect to computer 900, computer 901/902 is sometimes referred to as "remote computer", computer 901/902 is, for example, a server, a peer device or other common network node, and typically has many or all of the elements described relative to computer 900.
Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.
Processor 910 is, for example, a central processing unit (CPU), a microcontroller unit (MCU), digital signal processor (DSP), or the like.
Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.
Optionally, memory 920 is distributed. Portions of memory 920 can be removable or non-removable. For reading from media and for writing in media, computer 900 uses well-known devices, for example, disk drives, or tape drives.
Memory 920 stores modules such as, for example, a basic input output system (BIOS), an operating system (OS), a program library, a compiler, an interpreter, and a text- processing tool. Modules are commercially available and can be installed on computer 900. For simplicity, these modules are not illustrated.
CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.
Although CPP 100 is illustrated as being stored in memory 920, CPP 100 can be located elsewhere. CPP 100 can also be embodied in carrier 970.
Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.
Having described CPP 100, carrier 970, and signal 980 in connection with computer 900 is convenient. Optionally, further carriers and further signals embody computer program products (CPP) to be executed by further processors in computers 901 and 902.
Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970. Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.
Input device 940 and output device 950 can be combined to a single device. Any device 940 and 950 can be provided optional.
Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.
Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.
Networks are commonplace in offices, enterprise-wide computer networks, intranets and the Intemet (e.g., world wide web). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.
A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).
Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.
Computer and program are closely related. As used hereinafter, phrases, such as "the computer provides" and "the program provides", are convenient abbreviation to express actions by a computer that is controlled by a program.

While the invention has been described in terms of particular methods, programs and systems, those of skill in the art will understand based on the description herein that it is not limited merely to such particulars and that the full scope of the invention is properly determined by the claims that follow.
While the explanation conveniently uses assumptions, such as by referring to a license agreement between customer and vendor in an environment of services for business applications, the principles of the invention can also be to other environments, such as by referring to copyright agreements between author and consumer (e.g., in music business).
While the explanation conveniently distinguishes license availability in terms of PRESENCE and ABSENCE, further information might be distinguished (e.g., license type).

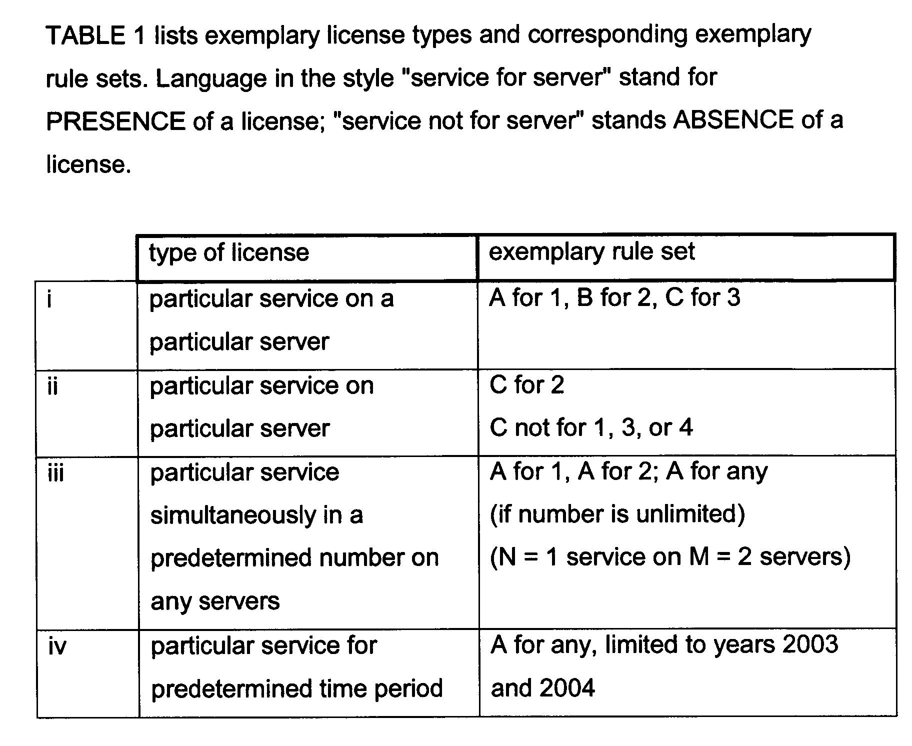

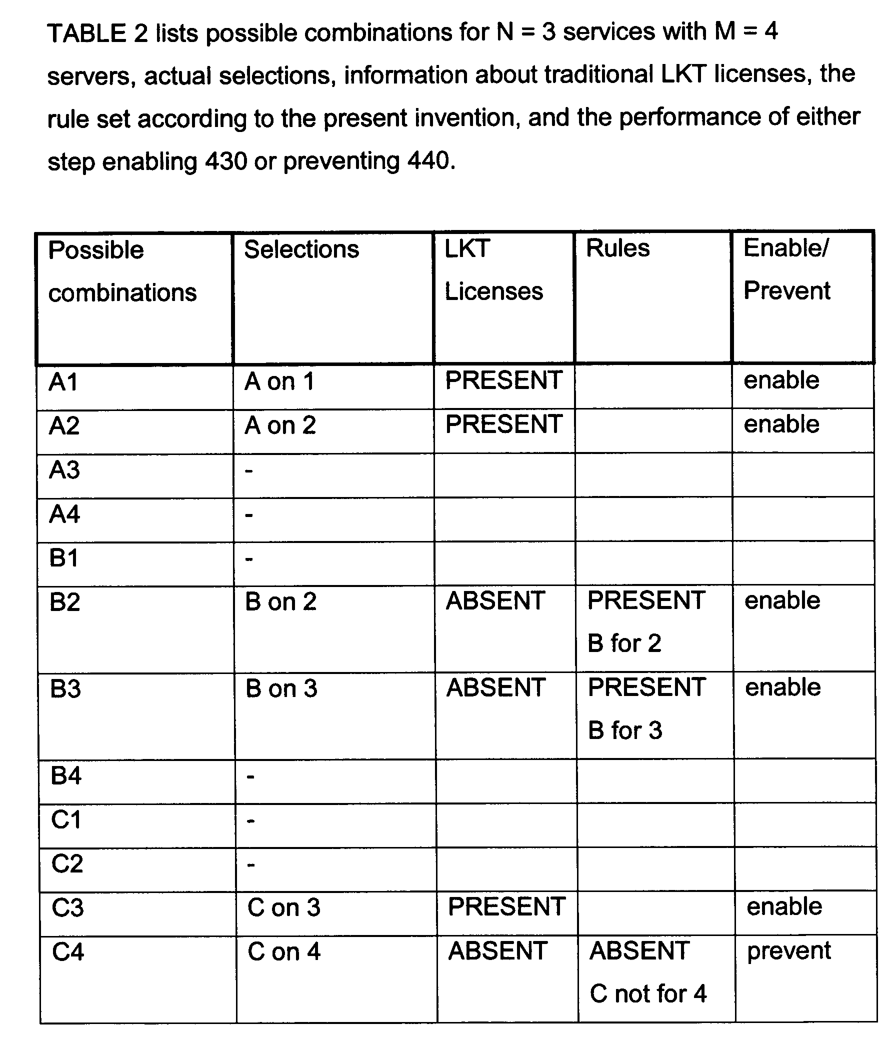

### Reference Numbers

| | | |
|---|---|---|
| #213 | software key | |
| #913, #912 | hardware key | |
| 1, ..., 4 | particular servers | |
| 100 | computer-program-product | CPP |
| 201 | service vendors | SV |
| 202 | license organization | LO |
| 203 | service customer | SC |
| 212 | license manager | LM |
| 213 | service | S |
| 213 for 913 | license | |
| 223 | service wrapper | SW |
| 252 | rule set | |
| 400 | method | |
| 410 | installing | |
| 420 | applying | |
| 430 | enabling | |
| 900 | computer | |
| 910 | processor | |
| 912 | license management computer | LMC |
| 913 | server | |
| 920 | memory | |
| 930 | bus | |
| 940 | input device | |
| 950 | output device | |
| 960 | user interface | |
| 970 | program carrier | |
| 980 | program signal | |
| 999 | computer network system | |
| A, ..., C | particular services | |
| A to 1, ..., C to 4 | service-to-server assignments | |
| A for 1, ... | license present | |
| C not for 3 | license absent | |
| m, M | index and number of services | |
| n, N | index and number of servers | |
| S to S | service-to-server | |

## Claims

1. Method (400) for operating a computer service (213) selected from a set of services on a computer server (913) selected from a set of computer servers, wherein the execution of the service (213) by a first partner (203) depends on a license agreement between the first partner (203) with a second partner (201); the method (400) comprising:
• installing (410) - exclusively on a license management computer (912) under supervision of the second partner (201) - a license rule set (252) for determining the availability state of a license for any service-to-server assignment;
• applying (420) the rule set (252) for a particular service-to-server assignment to determine the availability state; and
• for a first availability state, enabling (430) the execution of the computer service (213) according to the particular service-to-server assignment.

2. Method according to claim 1, wherein installing (410) comprises to install a license manager (212) on the license management computer (912).

3. Method according to claim 2, wherein installing (410) comprises to install the license manager (212) and the rule set (252) at different time points.

4. Method according to claim 2, wherein installing (410) comprises to install the license manager (212) and the rule set (252) substantially simultaneously.

5. Method according to claim 2, wherein installing (410) comprises to install the license manager (212) on such a license management computer (912) that has processor and memory redundancy.

6. Method according to claim 1, wherein installing (410) comprises to use license key technology (LKT).

7. Method according to claim 1, wherein installing (410) comprises to install the rule set (252) in form of a table.

8. Method according to claim 1, wherein applying (420) the rule set (252) is performed upon receiving a request from the server of the particular service-to-server assignment.

9. Method according to claim 1, wherein applying (420) the rule set (252) is performed upon receiving a request from a service wrapper (223).

10. Method according to claim 9, wherein the service wrapper (223) participates in step enabling (430) by using license key technique (LKT).

11. Method according to claim 1, wherein applying (420) the rule set (252) comprises to record the particular service-to-server assignment for that the first state has been established.

12. Method according to claim 8, wherein applying (420) the rule set (252) comprises to record the particular service-to-server assignment in combination with a derived rule so in repetition of step applying (420) for a further service-to-server assignment, the second state of a license is determined.

13. Method according to claim 1, wherein for a second availability state, the following is performed: preventing (440) the execution of computer service (213) according to the particular service-to-server assignment.

14. Method according to claim 13, wherein the first availability state is presence of the license and the second availability states is absence of the license.

15. Method according to claim 1, wherein the rule set determines the availability of licenses with types selected from the group of:
• license to use a particular service on a particular server;
• license to use a particular service on a particular server;
• license to use a particular service simultaneously in a predetermined number on any servers; and
• license to use a particular service for a predetermined time period.

16. Method according to claim 1, wherein the steps are performed as follows:
• installing (410) by a license organization (202) according to a license agreement between a service vendor (201) and a service customer (203); and
• applying (420) by the license organization (202).

17. Computer system to perform any method according to any of claims 1-16.

18. Computer program having instructions that causes a computer to perform the method according to any of claim 1-16.

19. Computer system with a set of computer servers, for operating a computer service (213) selected from a set of services on a particular computer server (913) that is selected from the set of computer servers, wherein the execution of the service (213) by a first partner (203) depends on a license agreement between the first partner (203) with a second partner (201);
the computer system comprising:
an installing means to install a license rule set (252), the rule set for determining the availability state of a license for any service-to-server assignment, wherein the installing means installs the rule set (252) on a license management computer (912) exclusively under supervision of the second partner (201);
an applying means to apply the rule set (252) for a particular service-to-server assignment to determine the availability state; and
an enabling means to enable the execution of the computer service (213) according to the particular service-to-server assignment in case of a first availability state.
